# EUROPEAN PATENT APPLICATION

(11) **EP 2 840 311 A1**
(43) Date of publication of application: **25.02.2015**
(21) Application number: 13181205.9
(22) Date of filing: 21.08.2013
(51) Int. Cl.: F23K 5/10, F02M 37/00, F02D 19/06

(54) **Blending ethanol/castor oil based fuels**

(71) Applicant: Caterpillar Motoren GmbH & Co. KG, 24159 Kiel (DE)
(72) Inventor: von der OSTEN-SACK, Andreas, 24145 Kiel (DE); REEH, Jens-Uwe, 24220 Flintbek (DE)
(74) Representative: Kramer Barske Schmidtchen Patentanwälte PartG mbB

(57) **Abstract**

An ethanol/castor oil treatment system for preparing a ethanol/castor oil based fuel for use as a fuel of an internal combustion engine (100) comprises an ethanol tank (32), an ethanol pump (42) fluidly connected to the ethanol tank (32) and having an ethanol output (50A), a castor oil tank (34), a castor oil pump (44) fluidly connected to the castor oil tank (34) and having a castor oil output (50B), a blended fuel line (52) having an inlet end fluidly connected to the ethanol output (50A) and the castor oil output (50B). The ethanol pump (42) and the castor oil pump (44) are mass and/or volume controlled pumps such that ethanol and castor oil are pumped to the blended fuel line in an adjustable mass and/or volume ratio, thereby, for example, providing the required lubrication to the therewith operated internal combustion engine.

## Description

### Technical Field

The present disclosure generally refers to internal combustion engines (ICEs) operable with multiple types of fuels and particularly to providing fuel conditioning and supply configurations for ethanol based fuels.

Moreover, the present disclosure generally refers to switching between crude oil based fuels and ethanol based fuel. Moreover, the present disclosure generally refers to an engine fuel system for operating an engine with multiple types of fuels and particularly with crude oil based fuels and ethanol based fuels.

### Background

Alternative fuels replacing crude oil based fuels are the subject of ongoing interest, in particular with respect to the replacement of crude oil based fuels such as Diesel oil, light fuel oil (LFO), and heavy fuel oil (HFO). Alternative fuels include ethanol based fuels such as those disclosed, for example, in the application "ETHANOL-BASED FUEL AND USE THEREOF" filed on February 28, 2012 by Caterpillar Motoren GmbH & Co. KG.

The chemical composition and the physical properties of ethanol based fuels can differ significantly from those of crude oil based fuels such as Diesel oil, and HFO.

Accordingly, the use of alternative fuels may require an adaptation of ICEs to those specific features of alternative fuels. This may in particular be the case for large ICEs operated at medium speed. Aspects of self-ignition ICEs for operation with alternative fuels are disclosed in the applications "OPERATING A POWER PLANT WITH ALTERNATIVE FUELS" and "SELF IGNITION OPERATION OF ALTERNATIVE FUEL INTERNAL COMBUSTION ENGINES" filed on February 28, 2012 by Caterpillar Motoren GmbH & Co. KG.

The present disclosure is directed, at least in part, to improving or overcoming one or more aspects of the related prior art and particularly to simplify the operation of a power plant operating ICEs with alternative fuels such as pyrolysis oil based fuels.

### Summary of the Disclosure

According to an aspect of the present disclosure, an ethanol/castor oil treatment system for preparing a ethanol/castor oil based fuel for use as a fuel of an internal combustion engine comprises an ethanol tank, an ethanol pump fluidly connected to the ethanol tank and having an ethanol output, a castor oil tank, a castor oil pump fluidly connected to the castor oil tank and having a castor oil output, a blended fuel line having an inlet end fluidly connected to the ethanol output and the castor oil output. The ethanol pump and the castor oil pump are mass and/or volume controlled pumps such that ethanol and castor oil are pumped to the blended fuel line in an adjustable mass and/or volume ratio, thereby, for example, providing the required lubrication to the therewith operated internal combustion engine.

According to another aspect of the present disclosure, a power plant system comprises an ethanol/castor oil treatment system as described above and a power house fluidly connected to the ethanol/castor oil treatment system, wherein the power house comprises an internal combustion engine configured for operation with the ethanol/castor oil based fuel.

Other features and aspects of this disclosure will be apparent from the following description and the accompanying drawings.

### Brief Description of the Drawings

Fig. 1 shows a schematic block diagram of a multi-fuel power plant;
Fig. 2 is a flowchart illustrating operation of a multi-fuel power plant with ethanol/castor oil based fuel or Diesel fuel;
Fig. 3 is a flowchart illustrating operation of a multi-fuel power plant with HFO;
Fig. 4 is a flowchart illustrating the switching from HFO operation to ethanol/castor oil based fuel operation; and
Fig. 5 is a flowchart illustrating the switching from ethanol/castor oil based fuel operation to HFO operation.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that the preparation of an ethanol/castor oil based fuel requires a volume/mass based mixing process to provide the required fuel properties such as fulfilling engine specific lubrication requirements. In particular, it was realized that mixing ethanol and castor oil using identical pumps allows setting the volume ratios in a simple manner. For example, a fuel blending unit is proposed to include feeding pumps for the ethanol and the castor oil, respectively, to set the mass or volume flow of both feeding pumps for the desired blending. Those ethanol and castor oil pumps may be frequency controlled to have the possibility to set via a control unit the blending factor, for example, between 50 % and 10 % of castor oil according to the engine lubrication needs and, in some embodiments, partly for viscosity adjustment of pure ethanol.

The present disclosure may further be based in part on the realization that the operation of a power plant with multiple fuels should not be affected by the specific features of those fuels and any incompatibility between those fuels. For example, operation with different fuels may require fuel specific temperatures to be controlled by the engine. Exposing and thus heating of ethanol/castor oil based fuels to temperatures around, for example, 80 °C is not desired. Similarly, cooling HFO, which requires higher temperatures to provide sufficient viscosity, by thermal contact with the colder ethanol based fuel is also not desired. Thus, an immediate change between ethanol based fuels and HFO requires some temperature adjustment of the engine fuel circuit. Accordingly, it is proposed herein to operate the ICE for a transition period with Diesel oil until an acceptable temperature has been reached.

Regarding some aspects, the present disclosure may be based in part on the realization that also the fuel system needs to provide sufficient thermal separation between HFO and ethanol/castor oil based fuel lines, in particular in the supply of a circulating tank of an engine recirculation unit, as well as with respect to heating and cooling requirements for those fuels within the engine recirculation unit.

To provide a multi-fuel power plant using one or more ICEs operated inter alia with ethanol/castor oil based fuels and crude oil based fuels and nevertheless providing power efficiently, adverse effects may be avoided or at least reduced when continuously operating the ICE in line with one or more of the herein proposed concepts.

The herein described multi-fuel power plant may be based on units that are all located at the same site. For example, fuel treatment and power generation take place at the same site. However, similarly, one may perform the treatment of ethanol/castor oil based fuels at a site close to the ethanol (and/or castor oil) generating process and then transport the treated ethanol/castor oil based fuel (by ship, train, or other means) to the site of the power generation at which other fuels as well as the internal combustion engine(s) are provided.

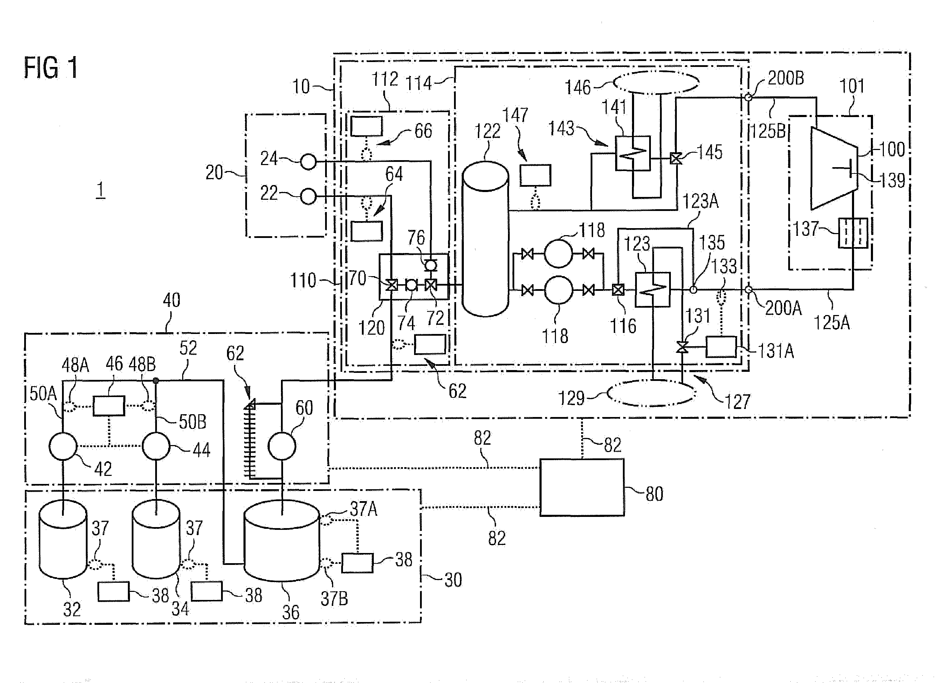

As shown in Fig. 1, an exemplary power plant system 1 includes a power house 10 with one or more ICEs 100 and one or more circulating systems 110, a crude oil based fuel tank arrangement 20 for Diesel oil and HFO, an ethanol based fuel tank arrangement 30, an ethanol/castor oil treatment unit 40, and a control unit 80.

Crude oil based fuel tank arrangement 20 comprises the conventional fuel supply systems for Diesel oil and HFO, including, for example, respective tanks such as Diesel oil tank(s), HFO tank(s), HFO waste tank(s), an HFO treatment unit for cleaning the HFO, for example, via a centrifuge based system, and Diesel oil pump 22 and HFO pump 24.

Ethanol based fuel tank arrangement 30 is configured to provide and store the fuels for the ethanol/castor oil based fuel treating and includes, for example, an ethanol tank 32, a castor oil tank 34, and a storage tank 36 for the blended ethanol/castor oil fuel.

Ethanol/castor oil treatment unit 40 comprises an ethanol feeding pump 42 fluidly connected to ethanol tank 32 and a castor oil feeding pump 44 fluidly connected to castor oil tank 34. Ethanol/castor oil treatment unit 40 comprises further a programmable logic controller (PLC) 46 and volume flow sensors 48A and 48B for controlling ethanol feeding pump 42 and castor oil feeding pump 44, respectively. Volume flow sensors 48A and 48B are positioned downstream of the respective pump at respective output lines 50A and 50B of ethanol feeding pump 42 and castor oil feeding pump 44. Output lines 50A and 50B are connected to each other to form a (single) blended fuel line 52, which is connected to storage tank 36. By controlling ethanol feeding pump 42 and castor oil feeding pump 44, a blend of castor oil and ethanol is achieved and stored in storage tank 36.

Ethanol/castor oil treatment unit 40 is, thus, configured as a fuel blending unit, in which according to the mass and/or volume flow of feeding pumps 42 and 44 the blending occurs. Feeding pumps 42 and 44 are, for example, frequency controlled to have the possibility to set into PLC 46 (as a control unit or a part thereof) the blending factor between, for example, 50 % by volume and 10 % by volume of castor oil according to the respective lubrication needs of ICE 100. For instance, a ratio of 80 % by volume castor oil and 20 % by volume ethanol may be provided to storage tank 36.

As the castor oil provides for the lubrication of ICE 100, the engine specific lubrication and, thus, the mixing ratio is essential for reliable long term operation of ICE 100 with the ethanol based fuel. Accordingly, using the disclosed mass and/or volume flow controlled blending presents an efficient approach to ensure the required lubrication conditions.

Ethanol tank 32 and castor oil tank 34 may further be monitored with a temperature and level indicator 37. Similarly, storage tank 36 may be provided with an upper level indicator 37A and a lower level indicator 37B as well as a temperature indicator (not shown). The indicators 37, 37A, 37B are connected to one or more PLCs 38, which provide signals to control unit 80 for supervising the blending process. For example, the blending will be initiated if lower level indicator 37B flags a low level. Thereby, a sufficient amount of ethanol/castor oil fuel is ensured in storage tank 36. Similarly, the blending will be stopped when one of level indicators 37 or upper level indicator 37A indicates the reaching of the respective level. Thereby, only the blending of the requested ratio can be ensured and an overfilling of storage tank 36 can be avoided, respectively. Similarly, the temperature can be monitored to avoid overheating of each of castor oil and ethanol as well as of the blend itself.

In some embodiments, intermediate storage tank 36 has a small volume that is provided with an almost constant level and operates as a buffer for a constant engine operation.

For example, an ethanol/castor oil fuel may consist of, based on the total volume of ethanol and castor oil, 20 to 90 % by volume ethanol and 80 to 10 % by volume castor oil (in particular 40 to 90 % by volume ethanol and 60 to 10 % by volume castor oil), and optionally including one or more additives in a total amount of up to 3 wt.-% of the total weight of the ethanol and castor oil.

The ethanol may be from biological sources. The term "ethanol" as used herein and in the appended claims comprises both absolute ethanol (i.e. ethanol containing less than 2 % by volume (for example, less than 0,5 % by volume) water) and ethanol containing considerable amounts of water.

Castor oil is a vegetable oil obtained from castor seed of the castor plant *Ricinus communis.* Ricinoleic acid, which is the main fatty acid chain of castor oil (85 to 95 wt.-%), has a hydroxyl group at C₁₂, which provides the fatty acid chain with polar properties, promoting solubility in polar liquids like ethanol. At the same time, the remaining non-polar hydrocarbon chain of ricinoleic acid still provides sufficient non-polar character such that castor oil is miscible with non-polar liquids, like, for example, crude oil based fuels such as Diesel oil, LFO or HFO.

The ethanol content may be 40 to 80 % by volume (e.g. 45 to 65 % by volume or 45 to 55 % by volume or 48 to 52 % by volume) and the castor oil content is 60 to 20 % by volume (e.g. 55 to 35 % by volume or 55 to 45 % by volume or 52 to 48 % by volume). For economic reasons, the ethanol content of the ethanol-based fuel may be as high as possible, for example, 60 to 90 % by volume, or 70 to 90 % by volume, or 80 to 90 % by volume or 85 to 90 % by volume, in case the ethanol-based fuel is to be used for continuous (long-time) operation of an ICE, in particular a self-ignition ICE.

The ethanol-based fuel may optionally include one or more additives, for example, in a total amount of up to 3 wt.-% of the total weight of the ethanol and castor oil, preferably in a total amount of up to 2 wt.-%, in particular in a total amount of up to 1 wt.-% of the total weight of the ethanol and castor oil. Said additives may be selected from the group of additives consisting of thermal stabilizers, aging stabilizers, antioxidants, coloring agents, dyes, rust inhibitors, inhibitors of gum formation, metal deactivators, upper cylinder lubricants, friction modifiers, detergents, bacteriostatic agents, fungicides, microbiocides, and mixtures thereof.

The additives optionally included in the ethanol-based fuel may serve to improve one or more properties of the ethanol-based fuel, if considered to be necessary in view of the used engine type or any other circumstances, which require the use of additives. However, in view of environmental concerns (such as increased unwanted emissions), the ethanol-based fuel may be provided devoid of any additives.

Referring again to ethanol based fuel tank arrangement 30 shown in Fig. 1, tanks (not shown in Fig. 1) for specific additives of the ethanol based fuel may be provided.

Further details of an ethanol based fuel are disclosed, for example, in the application "ETHANOL-BASED FUEL AND USE THEREOF" filed on February 28, 2012 by Caterpillar Motoren GmbH & Co. KG.

An exit of storage tank 36 is connected to an ethanol/castor oil based fuel pump 60. Ethanol/castor oil based fuel pump 60 may be fluidly connected to a return line (over flow line 61) of the pressure side of ethanol/castor oil based fuel pump 60, which is used in case ICE 100 is not operated and the fuel is pumped in a circle. For that purpose, a pressure holding valve with proportional characteristic and a line with cooling means may be included to compensate the energy increase. Ethanol/castor oil based fuel pump 60 may be associated with ethanol/castor oil treatment unit 40 as shown in Fig. 1 or may be part of power house 10; the latter, for example, in case of a geographical separation of the blending process and the engine operation.

Ethanol/castor oil based fuel pump 60 may be controlled by a PLC and ethanol/castor oil based fuel counter unit 62. Similarly, Diesel oil and HFO pumps 22, 24 may receive respective fuels from respective tanks located in crude oil based fuel tank arrangement 20. Diesel oil and HFO pumps 22, 24 are controlled and monitored by a PLC and Diesel oil counter unit 64 and an PLC and HFO counter unit 66. Those PLC and fuel counter units are usually located within power house 10.

In Fig. 1, power house 10 includes ICE 100 associated with a circulating system 110 providing ICE 100 with fuel. In some embodiments, power house 10 may include several ICEs and circulating units. In some embodiments, one circulating unit may be associated with several ICEs.

Circulating system 110 includes a fuel selection unit 112, and a fuel recirculating unit 114. Fuel selection unit 112 may comprise the PLC and fuel counter units mentioned above as well as a specific valve unit 120. Valve unit 120 is configured for providing the respective of the different types of fuel to fuel recirculating unit 114.

Valve unit 120 is fluidly connected to ethanol/castor oil based fuel pump 60 as well as Diesel oil pump 22 and HFO pump 24. Valve unit 120 comprises a first fuel selection valve 70 fluidly connected to ethanol/castor oil based fuel pump 60 and the Diesel oil supply system (for example respective Diesel oil pump 22). Valve unit 120 comprises further a second fuel selection valve 72 fluidly connected to first fuel selection valve 70 and the HFO fuel supply system (for example respective HFO pump 24).

As shown in Fig. 1, first fuel selection valve 70 is separated from the loop of pre-heated piping which is usually provided for the HFO fuel supply system. Moreover, a first thermal isolator 74 is provided between first fuel selection valve 70 and second fuel selection valve 72. Additionally or alternatively, a second thermal isolator 76 may be provided between the second fuel selection valve 72 and the HFO piping. Thermal isolators may be piping segments configured as, for example, rubber compensators/isolators, ceramic thermal isolators, or cooled doubled walled piping segments.

The use of two specially separated valves as well as the thermal isolators provides a thermal buffer from the HFO piping to the ethanol based fuel piping and reduce thermal stress in the case of switching between fuels requiring different temperatures such as ethanol/castor oil fuel and HFO.

An exit of second fuel selection valve 72 is fluidly connected to fuel recirculating unit 114 such that fuel recirculating unit 114 can receive fuel from second fuel selection valve 72 to compensate for the fuel combusted by ICE 100. Depending on the load of the ICE 100, the pumping speed of feed pump(s) providing the fuel may be adjusted, for example, via PLCs receiving volume data from respective volume sensors.

Fuel recirculating unit 114 comprises a circulating tank 122 and one or more circulating pumps 118 for pumping the fuel through the engine fuel circuit, specifically via a fuel supply line 125A and via a fuel return line 125B and various elements provided therein.

For example, within fuel supply line 125A, fuel recirculating unit 114 further comprises a heat exchanger 123 and related thereto a heat exchanger by-pass 123A using valves, for example, one or more pairs of two-way valves, or a three-way valve 116 as shown in Fig. 1. Heat exchanger by-pass 123A may, for example, be activated for Diesel oil and ethanol/castor oil based fuels.

Heat exchanger 123 is provided for heating the fuel, usually HFO, prior entering an engine unit 101 including ICE 100 to a temperature in, for example, a range from 60 °C to 180 °C depending on the type of HFO. Heat exchanger 123 is integrated into a heating cycle 127 using a heating media and comprising, for example, a storage tank 129 at a respective temperature of, for example, 80 °C or 150 °C. Heating cycle 127, in particular a valve 131, is controlled by a PLC 131A receiving viscosity data from viscosity sensor (unit) 133. Viscosity sensor 133 is positioned downstream of heat exchanger 123 and a by-pass return point 135, for example, at the entrance to engine unit 101.

Engine unit 101 comprises a double filter 137 and ICE 100 including an engine fuel system 139. The fuel from heat exchanger 123 or by-pass 123A passes double filter 137 and is provided to the engine fuel system 139.
As shown in Fig. 1, engine unit 101 is fluidly connected to fuel recirculating unit 114. Specifically, a fuel supply line outlet 200A of fuel supply line 125A is fluidly connected to an inlet of the engine fuel system 139, for example, via double filter 137. Similarly, a fuel return line inlet 200B of fuel return line 125B is fluidly connected to an outlet of the engine fuel system 139.

Unused fuel exits engine unit 101 and is returned into fuel recirculating unit 114 via fuel return line 125B. The unused fuel such as Diesel oil or ethanol/castor oil based fuel is cooled in a cooler 141 to a temperature of, for example, 35 °C. Cooler 141 is integrated into a cooling cycle 143 using a cooling media and comprises, for example, a compact radiator cooler 146. Cooling cycle 143 and in particular the flow through cooler 141 is controlled based on temperature data received from a PLC and temperature sensor unit 147 positioned downstream of cooler 141.

As cooling is not needed to be performed for all types of fuels such as for HFO, a cooler by-pass 141A is provided starting at a cooler by-pass valve 145 upstream of cooler 141.

After cooler 141 or cooler by-pass 141A, the fuel is returned to circulating tank 122 to mix with fuel provided thereto from valve unit 120.

Accordingly, a fuel recirculating cycle may comprise, starting at viscosity sensor 133, engine unit 101 (specifically double filter 137 and, for example, portions or all of engine fuel system 139 of ICE 100 depending on the engine fuel system's design), cooler 141 (in case operation with a fuel that requires cooling is intended) or cooler by-pass 141A, circulating tank 122, circulating pumps 118, and heat exchanger 123 (in case operation with a fuel that requires heating is intended) or heat exchanger by-pass 123A.

Orientation of fuel valves 116, 145 are three-two way valves. The valve has three connection and two positions. The operation of the valve is by compressed air or electric motor, the position of the valve are controld by end position sensors which are connected to the respective PLCs.

In some embodiments, any or most of HFO guiding pipes are provided with trace heating such that in case of an emergency shut-off, HFO within the engine fuel circuit can be maintained at the required temperature.

The operation of power plant system 1 is controlled by a control system. Specifically, the control system is configured to control operation of ICE 100 based on a required mechanical output. The control system further controls the operation with the various types of fuels as well as the switching between the various types of fuels with a continuously operated engine.

The control system includes control unit 80 (which may be configured as a Supervisory Control and Data Acquisition (SCADA) unit), one or more control sensors such as temperature and/or level indicator/sensor 37, pressure sensors (not shown), and fluid viscosity sensors (for example viscosity sensor 133), and control lines 82. For illustration purposes, SCADA unit 80 is connected exemplarily to power house 10, ethanol based fuel tank arrangement 30, and ethanol/castor oil treatment unit 40. Control sensors may be configured to measure, for example, the temperature and/or the pressure of the charge air and the exhaust gas at the various pressure stages as well as the temperature, viscosity, and/or pressure of the various fuels/fluids and provide those data to SCADA unit 80. In the drawings, most sensors not shown for simplifying the same.

SCADA unit 80 may be a single microprocessor or plural microprocessors that may include means for controlling, among others, an operation of the various components of power plant system 1, for example, fuel selection valves 70, 72, and heat exchangers 123, 141. SCADA unit 80 may be a general engine control unit (ECU) capable of controlling numerous functions associated with power plant system 1 and/or its associated components such as ICE 100. SCADA unit 80 may include all the components required to run an application such as, for example, a memory, a secondary storage device, and a processor such as a central processing unit or any other means known in the art for controlling power plant system 1 and its various components and units.

Various other known circuits may be associated with SCADA unit 80, including power supply circuitry, signal-conditioning circuitry, communication circuitry, and other appropriate circuitry. SCADA unit 80 may analyze and compare received and stored data, and, based on instructions and data stored in memory or input by a user, determine whether action is required. For example, SCADA unit 80 may compare received values with target values stored in memory, and based on the results of the comparison, SCADA unit 80 may transmit signals to one or more components to alter the operation status thereof.

SCADA unit 80 may include an engine control unit, electrioncal control modules, and any memory device known in the art for storing data relating to operation of the combustion engine and its components. The data may be stored in the form of one or more maps that describe and/or relate, for example, injection timing. Each of the maps may be in the form of tables, graphs, and/or equations, and include a compilation of data collected from lab and/or field operation of the combustion engine. The maps may be generated by performing instrumented tests on the operation of the combustion engine under various operating conditions while varying parameters associated therewith. The controller may reference these maps and control operation of one component in response to the desired operation of another component.

Specifically, SCADA unit 80 is configured to receive inputs from the various control sensors. Using the inputs from the control sensors, SCADA unit 80 is configured to control - via control connections lines 82 (indicated as dotted lines in Fig. 1) - generally the blending of the ethanol based fuel, the fuel supply, and the operation of ICE 100, and specifically valves 70, 72, 116, 145, viscosity sensor 133, heat exchanger 123, fuel cooler 141, and pumps 22, 24, 42, 44,60, 118.

A common control unit or separate control units may be provided for the various units. Moreover, depending on having a power plant system at a single site or multiple sites, a common control unit or separate control units may be provided for the blending process and the power generating process and the related units.

In some embodiments, power plant system 1 may be operated only with Diesel oil and ethanol based fuel. In that case, the configuration shown in Fig. 1 would simplify accordingly. Specifically, HFO aspects such as heater may not need to be provided and fuel recirculating unit 114 may be simplified accordingly, as will be apparent to the person skilled in the art.

### Industrial Applicability

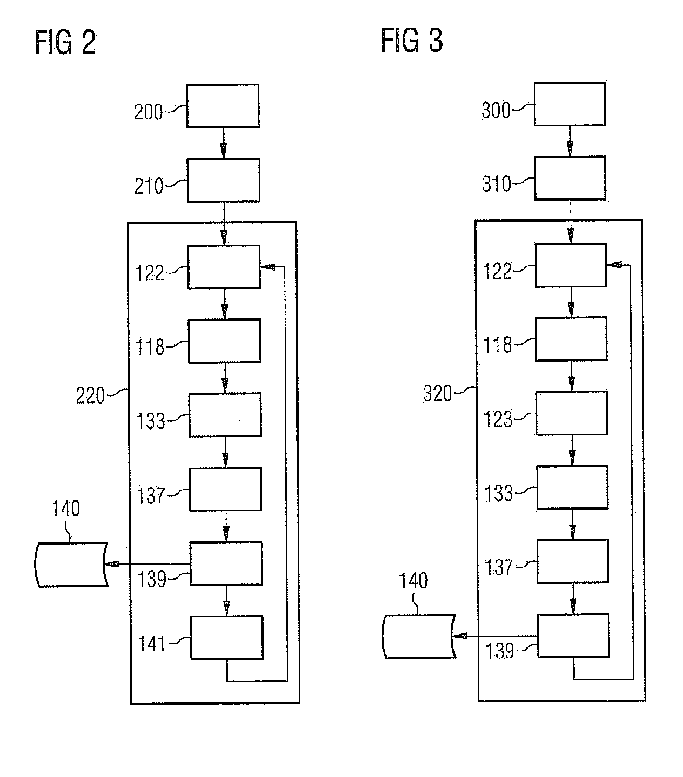

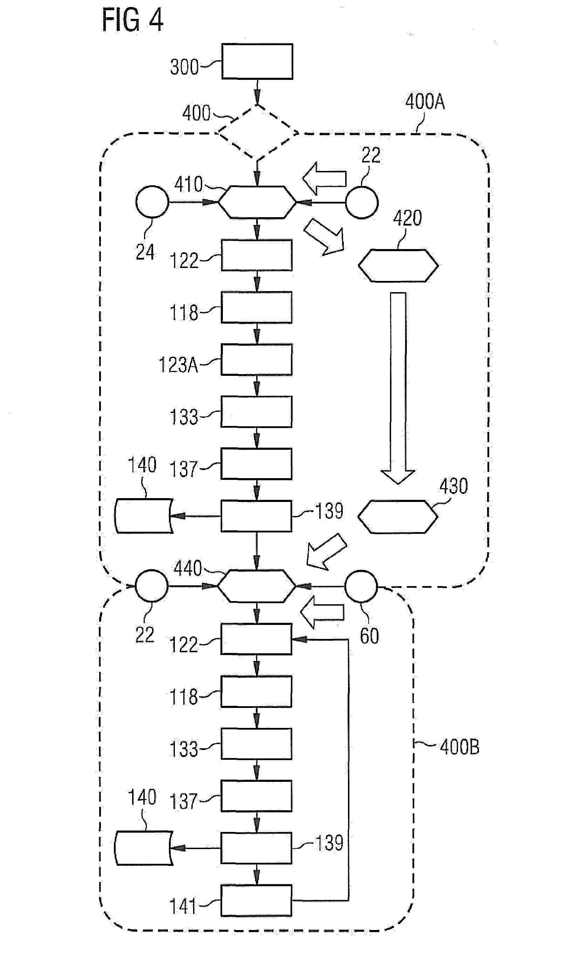

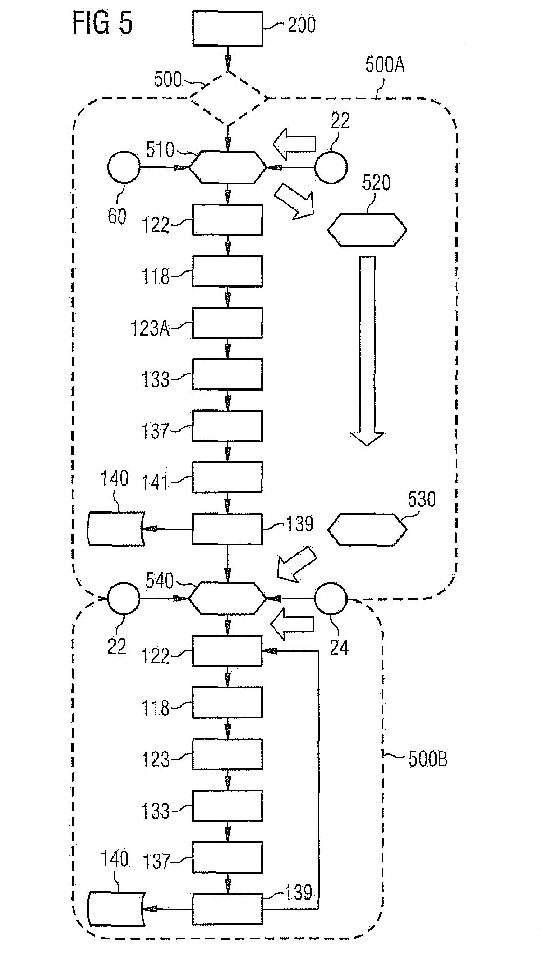

Fig. 2 shows a flow chart illustrating operating an internal combustion engine with ethanol/castor oil based fuel or Diesel oil and Fig. 3 shows a flow chart illustrating operating an internal combustion engine with heavy fuel oil operation. Fig. 4 and Fig. 5 disclose flow charts of switching from heavy fuel oil to ethanol/castor oil based fuel operation and vice versa.

Referring to Fig. 2 and Fig. 1, for ethanol/Diesel operation, valve unit 120 is set to block HFO supply and connects a respective pump (ethanol/castor oil based fuel pump 60 or Diesel oil pump 22) via first fuel selection valve 70 to circulating tank 122 (step 200). The supply of fuel is in accordance with a status signal received from a respective fuel counter (step 210). In step 220, an engine fuel circuit is set, which is the same for ethanol/castor oil based fuel and Diesel oil.

As shown in Fig. 2, engine fuel circuit comprises circulating tank 122, circulating pumps 118, viscosity sensing unit 133, double filter 137, low pressure engine fuel system 139 (which supplies a high pressure injection system 140 - schematically shown in Figs. 4 and 5 - with fuel), and cooler 141.

Referring to Fig. 3 and Fig. 1, for HFO operation, valve unit 120 is set such that second selection valve 72 is set to connect the HFO pump 24 with circulating tank 122 (step 300). The fuel supply is controlled by HFO counter unit 66 (step 310).

In step 320, an engine fuel circuit is set to comprise circulating tank 120, circulating pumps 118, heat exchanger 123, viscosity sensing unit 133, double filter 137, and low pressure engine fuel system 139 (which supplies a high pressure injection system 140 with fuel).

Referring to Fig. 4 and Fig. 1, an exemplary switching from HFO to ethanol/castor oil based fuel operation is illustrated. The respective switching steps are included in Fig. 4 in a box 400A. The switching results in the operation in the ethanol/castor oil based fuel operation according to Fig. 2, which is schematically indicated in a box 400B.

The switching from HFO to ethanol/castor oil based fuel operation starts with supplying HFO (step 300) as disclosed in connection with Fig. 3. Then, for example, via control system 18, ethanol/castor oil based fuel operation is selected (step 400).

Once the switching process is initiated, second fuel selection valve 72 closes the connection to HFO pump 24 and opens the connection to first fuel selection valve 70 (step 410). As the outlet of first fuel selection valve 70 is already fluidly connected to Diesel pump 22 and the connection to ethanol/castor oil based fuel pump 60 is closed, the circulating tank 122 is refilled with Diesel oil. Using the HFO engine fuel cycle, the HFO is therefore replaced with Diesel fuel over time. Once viscosity sensor 132 indicates, for example, a viscosity of below 4 mm²/s and temperature sensor unit 147 indicates a temperature of the fuel in the engine fuel system of below 50 C°, three-way valve 116 is switched to by-pass heat exchanger 123 via heat exchanger by-pass 123A (step 420). About at that time, the fuel return line 125B is switched via cooler by-pass valve 145 to include cooler 141 (step 430).

Accordingly, engine fuel cycle now coincides with the ethanol/Diesel fuel cycle. Accordingly, first fuel selection valve 70 can now be switched to connect ethanol/castor oil based fuel pump 60 with circulating tank 122 (step 440).

In line with the above, in box 400A, an intermediate engine fuel circuit is illustrated, which includes heat exchanger by-pass 123A, while in box 400B, the respective components of ethanol/castor oil based fuel engine fuel circuit is indicated.

Referring to Fig. 5 and Fig. 1, an exemplarily switching process from ethanol/castor oil based fuel to HFO is schematically illustrated. In Fig. 5, a box 500A includes the switching steps, and a box 500B illustrates the resulting operation with HFO.

The switching from ethanol/castor oil based fuel to HFO operation starts with operating the engine with ethanol based fuel (step 200). Then, for example, using control unit 80, the selection of HFO operation is taken (step 500).

As a consequence of the selection of HFO operation, first fuel selection valve 70 is switched to connect circulating tank 122 no longer with ethanol/castor oil based fuel pump 60 and instead to connect the same with Diesel oil pump 22 (step 510). Then, a preset load depending time period is monitored, during which the engine fuel circuit is essentially freed of ethanol/castor oil based fuel. Accordingly, the portion of the same is reduced to essentially zero. The time period is depending on various parameters such as the engine type and the size of the engine fuel circuit, for example the size of the circulating tank 122.

After the time period, cooler 141 is bypassed via cooler by-pass 141A by switching cooler by-pass valve 145 (step 520).

About at that time (or shortly after), three-way valve 116 is switched to include heat exchanger 123 into fuel supply line 125A (step 530). At that stage, the engine fuel circuit is prepared for HFO operation, and second fuel selection valve 72 is switched to connect HFO pump 24 with circulating tank 122 while maintaining, for example, first fuel selection valve 70 in its setting (step 540). In Fig. 5, box 500B illustrates the resulting HFO engine fuel circuit.

During HFO operation, the fuel viscosity will increase with the decreasing portion of Diesel oil in the engine fuel circuit, and depending on the viscosity sensor 133, heat exchanger 123 is controlled to increase heating of the HFO/Diesel fuel mix to the respective temperature, to maintain the required viscosity.

Referring again to the blending process, the flow of the blend is exemplarily fed to an intermediate storage tank with a small volume to provide an almost constant level required as a buffer for a constant engine operation.

Referring again to the fuel switching process, the first fuel selection valve Diesel / Ethanol is not in the loop of pre-heated HFO piping, to reduce thermal stress in the case to switch from Diesel to Ethanol fuel. Downstream the first fuel selection valve, an HFO selection valve is installed to have a thermal buffer to the ethanol connection line, depending on the heating requirement for HFO operation. The selected fuel is transferred to a circulating tank, the tank needs to be adjusted on temperature in the case of switching from HFO to Ethanol and vice versa with Diesel as an intermediate fuel. From the circulating tank, the fuel is pumped into the fuel circulating line, in case of HFO operation the fuel will go through an HFO heater and a viscosity control unit to adjust the HFO viscosity in front of the engine. In Diesel and Ethanol fuel operation, the HFO heater is bypassed. After the engine, the HFO is directly transferred to the circulating tank and the additional power from fuel pump cooling is rejected by radiation and the mixing with fresh cooler HFO.

The Diesel and Ethanol based fuel require a cooler to reduce thermal stresses and to increase the viscosity to the minimum level of 1,6 mm²/s. After the Diesel and ethanol passes the cooler, the colder fuel is transferred to the circulating tank. To protect the ethanol based fuel, direct switching from HFO may be blocked into the PLC control unit as disclosed herein. Only in the case that the temperature of the circulating line is sufficient to allow a switch over, a switch to ethanol based fuel is possible. In the case that HFO or Diesel operation is not applicable in a power plant, the respective components can be removed from the circulating unit.

In general, there is the possibility to upgrade existing power plants with this technology in areas were ethanol production is available. The herein disclosed concepts provide for an independent solution for the market were Ethanol is the major fuel due to self-production, such as Brazil. The concept provides for those independent Ethanol markets a solution for operating engines with HFO, Diesel, and an Ethanol based fuel in parallel or, if an HFO application is not needed, only with Ethanol and/or Diesel. Thus, the herein disclosed concepts are, for example, applicable in areas where ethanol based fuels can easily be prepared such that power plant configurations can be based to a larger extent on those fuels.

Diesel oils as referred herein include, for example, Diesel oils with filling station quality have an average viscosity of arbound 2 mm²/s and 5 mm²/s at 40 °C. Generally, for viscosities below 16 mm²/s, pre-heating to get the right fuel injection viscosity for ICE 100 is not required.

Heavy Fuel Oil (HFO) means fuel oils with a viscosity above 50 mm²/s, these fuel oils need pre-heating to get pumpable. To reach fuel injection viscosity, HFO can be heated up to the maximum of 160 °C to get injection viscosity for the combustion into the ICE 100.

The herein disclosed concepts may be similarly applied to Marine Diesel Oil (MDO) and Marine Gas Oil, which are lite fractions, blended to a viscosity around 4 mm²/s to 30 mm²/s at 40 °C. Accordingly, if temperature adjustment is required the disclosed concepts may be applied when using the same together with an ethanol/castor oil based fuel.

The herein disclosed concepts provide Diesel engines as an alternative in the market segment in which ethanol fuels are used for Otto engines. In particular, the direct exchangeability from Diesel oil to the new ethanol based fuel provides an interesting basis for energy production.

In the following, various aspects are summarized:

Aspects regarding a fuel selection unit:

Aspect 1A. A fuel selection unit (112) for providing a fuel selected from a group of fuels comprising Diesel oil, heavy fuel oil, and an ethanol/castor oil based fuel to a fuel recirculating unit (114) of an internal combustion engine (100), the fuel selection unit (112) comprising;
a first fuel selection valve (70) for selecting a low temperature fuel, the first fuel selection valve (70) having a Diesel oil inlet, an ethanol/castor oil based fuel inlet, and a low temperature fuel outlet;
a second selection valve (72) for selecting from a low temperature fuel and a high temperature fuel, the second fuel selection valve (72) having a first inlet fluidly connected to the low temperature fuel outlet of the first fuel selection valve (70), a second heavy fuel oil inlet, and a selected fuel outlet; and
a first thermal isolator (74) provided in the fluid connection between the low temperature fuel outlet of the first fuel selection valve (70) and the first inlet of the second selection valve (72).

Aspect 2A. The fuel selection unit (112) of aspect 1A, further comprising a second thermal isolator (76) provided upstream of the second heavy fuel oil inlet of the second selection valve (72).

Aspect 3A. The fuel selection unit (112) of aspect 1A or aspect 2A, wherein the second heavy fuel oil inlet of the second selection valve (72) is oriented in the mounted state such that it opens into a fluid connection between the first inlet and the selected fuel outlet from the top.

Aspect 4A. The fuel selection unit (112) of any one of aspects 1A to 3A, wherein the first and/or second thermal isolator (74, 76) are a installed to prevent thermal cross heating to the fuel lines of Ethanol and Diesel. In the case that HFO is forseen in engine operation. The HFO piping is equipped with trace heating. Therefore a continues heat transfer is possibl from the the meatal pipe connestion. To prevent the metal connetxion to the Diesel and Ethanol fuel oil system a thermal isolators (74, 76) are installed.

Aspect 5A. The fuel selection unit (112) of any one of aspects 1A to 4A, further comprising at least one of a ethanol/castor oil based fuel counter unit (62), a heavy fuel oil counter unit (66), and a Diesel oil counter (64), each having a sensor provided upstream of the respective inlet to the respective selection valve (70, 72).

Aspect 6A. The fuel selection unit (112) of any one of aspects 1A to 5A, further comprising at least one of a ethanol/castor oil based fuel pump (60), a heavy fuel oil feed pump (24), and a Diesel oil feed pump (22), each being configured to be controlled by the respective fuel counter.

Aspects regarding a operating internal combustion egines with ethanol/castor oil based fuels:

Aspect 1B. A fuel recirculating unit (114) for providing fuels requiring different temperatures to an engine fuel system (139) of an engine unit (101), the fuel recirculating unit (114) comprising;
a circulating tank (122);
a fuel supply line outlet (200A) for fluidly connecting to an inlet of the engine fuel system (139);
a fuel supply line (125A) for fluidly connecting the circulating tank (122) to the engine fuel system (139), the fuel supply line (125A) having a fuel supply line outlet (200A) for fluid connection to an inlet of the engine fuel system (139);
a heat exchanger (123) provided on the fuel supply line (125A) for heating passing fuel;
a heat exchanger by-pass (123A) for by-passing the heat exchanger (123);
a fuel return line (125B) for fluidly connecting the engine fuel system (139) to the circulating tank (122), the fuel return line (125B) having a fuel return line inlet (200B) for fluid connection to an outlet of the engine fuel system (139);
a cooler (141) provided in the fuel return line (125B) for cooling passing fuel; and
a cooler by-pass (141A) for by-passing the cooler (141).

Aspect 2B. A fuel recirculating unit (114) for providing fuels requiring different temperatures to an engine fuel system (139) of an engine unit (101), the fuel recirculating unit (114) comprising;
a circulating tank (122);
a fuel supply line outlet (200A) for fluidly connecting to an inlet of the engine fuel system (139);
a fuel supply line (125A) for fluidly connecting the circulating tank (122) with the fuel supply line outlet (200A), wherein the fuel supply line includes a heat exchanger (123) for heating passing fuel and a heat exchanger by-pass (123A) for by-passing the heat exchanger (123);
a fuel return line inlet (200B) for fluidly connecting to an outlet of the engine fuel system (139);
a fuel return line (125B) for fluidly connecting the fuel return line inlet (200B) with the circulating tank (122), wherein the fuel return line (125B) includes a cooler (141) for cooling passing fuel and a cooler by-pass (141A) for by-passing the cooler (141).

Aspect 3B. The fuel recirculating unit (114) of any one of the preceding aspects, wherein the fuel supply line (125A) further comprises a by-pass return point (135) at which the heat exchanger by-pass (123A) recombines with an outlet of the heat exchanger (123), and
wherein the fuel recirculating unit (114) further comprises a viscosity sensor (133) positioned between the by-pass return point (135) and the fuel supply line outlet (200A).

Aspect 4B. The fuel recirculating unit (114) of any one of the preceding aspects, wherein the fuel supply line (125A) further comprises at least one feed pump (118).

Aspect 5B. The fuel recirculating unit (114) of any one of the preceding aspects, wherein the fuel return line (125B) further comprises a cooler by-pass valve (145) upstream of the cooler (141) and a temperature sensor unit (147) for controlling the cooler by-pass valve (145).

Aspect 6B. A circulating system (110) for a power plant (1) configured to provide an internal combustion engine (100) with fuel, the circulating system (110) comprising:
a fuel selection unit (112) for providing a fuel selected from a group of fuels comprising Diesel oil, heavy fuel oil, and the ethanol/castor oil based fuel to the fuel recirculating unit (114), wherein the fuel selection unit (112) comprises
a first fuel selection valve (70) for selecting a low temperature fuel, the first fuel selection valve (70) having a Diesel oil inlet, an ethanol/castor oil based fuel inlet, and a low temperature fuel outlet;
a second selection valve (72) for selecting from a low temperature fuel and a high temperature fuel, the second fuel selection valve (72) having a first inlet fluidly connected to the low temperature fuel outlet of the first fuel selection valve (70), a second heavy fuel oil inlet, and a selected fuel outlet; and
a fuel recirculating unit (114) of any one of the preceding aspects.

Aspect 7B. The circulating system (110) of aspect 6, wherein the fuel selection unit (112) further comprises
a first thermal isolator (74) provided in the fluid connection between the low temperature fuel outlet of the first fuel selection valve (70) and the first inlet of the second selection valve (72); and/or
a second thermal isolator (76) provided upstream of the second heavy fuel oil inlet of the second selection valve (72) and/or
at least one of an ethanol/castor oil based fuel counter unit (62), a heavy fuel oil counter unit (66), and a Diesel oil fuel counter (64), each having a sensor provided upstream of the respective inlet to the respective selection valve (70, 72) and/or
at least one of an ethanol/castor oil based fuel pump (60), a heavy fuel oil feed pump (24), and a Diesel oil feed pump (22), each being configured to be controlled by the respective fuel counter.

Aspect 8B. A method for fast switching an internal combustion engine (100) between heavy fuel oil operation and ethanol/castor oil-based fuel operation, the internal combustion engine (100) being supplied with fuel by a fuel recirculating unit (114) according to any one of aspect 1B to aspect 5B, the method comprising:
adapting the temperature of the engine fuel circuit during a transition period by Diesel oil operation.

Aspect 9B. The method of aspect 8B adapted for switching an internal combustion engine (100) from heavy fuel oil operation to ethanol/castor oil-based fuel operation, the internal combustion engine (100) being supplied with fuel by a fuel recirculating unit (114) according to any one of aspect 1B to aspect 5B, the method comprising:
operating the internal combustion engine (100) by supplying heavy fuel oil to a circulating tank (122) of a fuel recirculation unit (114) and setting the engine fuel circuit to include the heat exchanger (123) and the cooler by-pass (141A);
switching by supplying the circulating tank (122) with Diesel oil;
changing the engine fuel circuit to include the heat exchanger by-pass (123A) when detecting a viscosity below viscosity limit and having a circulated fuel temperature below a temperature limit;
changing the engine fuel circuit to include a cooler (141);
switching by supplying the circulating tank (122) with ethanol/castor oil-based fuel.

Aspect 10B. The method of aspect 9B, wherein the viscosity limit is set in a range of 3 to 5 mm²/s, for example, to 4 mm²/s and the temperature limit is set in a range from 30 °C to 60 °C, for example to 50 °C.

Aspect 11B. The method of any one of aspect 8B to aspect 10B, wherein the internal combustion engine (100) is supplied with fuel by a circulating system (110) according to aspect 6B or claim 7B; and/or
switching the second fuel selection valve (72) is performed only with the first fuel selection valve (70) being set to pass Diesel oil and/or
initiating the switching to ethanol/castor oil-based fuel operation is performed during continuous operation of the internal combustion engine (100).

Aspect 12B. The method of aspect 8B adapted for switching an internal combustion engine (100) from ethanol/castor oil-based fuel operation to heavy fuel oil operation, the internal combustion engine (100) being supplied with fuel by a fuel recirculating unit (114) according to any one of aspect 1B to aspect 5B, the method comprising:
operating the internal combustion engine (100) by supplying ethanol/castor oil-based fuel to a circulating tank (122) of a fuel recirculation unit (114) and setting the engine fuel circuit to include the heat exchanger by-pass (123A) and the cooler (141);
switching to supplying the circulating tank (122) with Diesel oil;
changing the engine fuel circuit to include the cooler by-pass (141) after a load depending time period, which is set to ensure that the ethanol/caster oil based fuel portion at the fuel in the engine fuel circuit is below a preset limit;
changing the engine fuel circuit to include the heat exchanger (123); and
switching to supplying the circulating tank (122) with heavy fuel oil.

Aspect 13B. The method of aspect 12B, wherein the load depending time period is set in a range, according to the size of the circulating tank (122) and the selected engine size, from 60 s to 2400 s, for example to 800 s.

Aspect 14B. The method of any one of aspect 8B to aspect 13B, wherein the fuel in the circulating tank (122) is heated after switching to Diesel fuel oil; and/or
wherein the engine fuel cycle is set:
to include, in heavy fuel operation, the circulating tank (122), feed pumps (118), heat exchanger (123), viscosity sensor (133), double filter (137), and low pressure engine fuel system (139); and/or
to include, in ethanol/castor oil based fuel operation, the circulating tank (122), feed pumps (118), viscosity sensor (133), double filter (137), low pressure engine fuel system (139), and cooler (141); and/or
to include, in Diesel oil operation initially the heavy fuel oil engine fuel cycle and then the ethanol/castor oil based fuel engine fuel cycle.

Aspect 15B. The method of any one of aspect 8B 7 to aspect 14B, wherein the internal combustion engine (100) is supplied with fuel by a circulating system (110) according to claim 5 or claim 6; and/or
switching the second fuel selection valve (72) is only performed with the first fuel selection valve (70) being set to pass Diesel oil; and/or
initiating the switching to ethanol/castor oil-based fuel operation is performed during continuous operation of the internal combustion engine (100).

Aspect 16B. A power plant system (1) comprising:
at least one of an ethanol/castor oil based fuel tank, a Diesel oil tank, and a heavy fuel oil tank;
a fuel recirculating unit (114) of any one of aspect 1B 1 to aspect 5B, receiving selectable fuel from von of the ethanol/castor oil based fuel tank, the Diesel oil tank, and the heavy fuel oil tank;
an engine unit (101) comprising an internal combustion engine (100) with an engine fuel system (139) connected to the fuel recirculating unit (114), and
a control unit (80) configured to perform any one of the methods of aspect 8B to aspect 15B.

Although the preferred embodiments of this invention have been described herein, improvements and modifications may be incorporated without departing from the scope of the following claims.

## Claims

1. An ethanol/castor oil treatment system for preparing a ethanol/castor oil based fuel for use as a fuel of an internal combustion engine (100), the ethanol/castor oil treatment system comprising:
an ethanol tank (32);
an ethanol pump (42) fluidly connected to the ethanol tank (32) and having an ethanol output (50A);
a castor oil tank (34);
a castor oil pump (44) fluidly connected to the castor oil tank (34) and having a castor oil output (50B);
a blended fuel line (52) having an inlet end fluidly connected to the ethanol output (50A) and the castor oil output (50B); and
wherein the ethanol pump (42) and the castor oil pump (44) are mass and/or volume controlled pumps such that ethanol and castor oil are pumped to the blended fuel line in an adjustable mass and/or volume ratio.

2. The ethanol/castor oil treatment system of claim 1, further comprising a temperature and/or level indicator (37) for at least one of the ethanol tank (32), the castor oil tank (34), and the storage tank (36).

3. The ethanol/castor oil treatment system of any one of the preceding claims, further comprising:
a storage tank (36) for storing prepared ethanol/castor oil based fuel; and
wherein the blended fuel line (52) has an outlet fluidly connected to the storage tank (36).

4. The ethanol/castor oil treatment system of any one of the preceding claims, further comprising a mass and/or volume flow sensor unit (48A) for detecting the mass and/or volume flow of ethanol at the ethanol output (50A) and a mass and/or volume flow sensor unit (48B) for detecting the mass and/or volume flow of castor oil at the castor oil output (50B).

5. The ethanol/castor oil treatment system of claim 4, wherein the mass and/or volume flow sensor unit (48A) and the mass and/or volume flow sensor unit (48B) are located at the respective output (50A, 50B) downstream of the respective pump and upstream of the blended fuel line (52).

6. The ethanol/castor oil treatment system of any one of the preceding claims, further comprising a control unit (46) for controlling the pump volume of at least one of the ethanol pump (42) and the castor oil pump (44).

7. The ethanol/castor oil treatment system of claim 6, wherein the control unit (80, 46) receives mass/volume information detected, for example, by the mass and/or volume flow sensor unit (48A) and the mass and/or volume flow sensor unit (48B).

8. The ethanol/castor oil treatment system of any one of the preceding claims, wherein the ethanol pump (42) and the castor oil pump (44) are frequency controlled pumps and/or are identical pumps.

9. The ethanol/castor oil treatment system of any one of the preceding claims, wherein for the control of the ethanol pump (42) and the castor oil pump (44) pre-set mass and/or volume ratios are provided in a control unit (80, 46) according to engine type, ethanol type and quality, castor oil type and quality, and the mixing ratio of the blend fuel.

10. The ethanol/castor oil treatment system of any one of the preceding claims, further comprising an ethanol/castor oil based fuel pump (60) for pumping the blended ethanol/castor oil based fuel out of the storage tank (36).

11. A power plant system (1) comprising:
an ethanol/castor oil treatment system according to anyone of the preceding claims; and
a power house (10) fluidly connected to the ethanol/castor oil treatment system and comprising an internal combustion engine (100) configured for operation with the ethanol/castor oil based fuel.

12. The power plant system (1) of claim 11, wherein the power house (10) further comprises:
a fuel recirculating unit (114) of the internal combustion engine (100); and
a fuel selection unit (112) for providing a fuel selected from a group of fuels comprising Diesel oil, heavy fuel oil, and the ethanol/castor oil based fuel to the fuel recirculating unit (114), wherein the fuel selection unit (112) comprises
a first fuel selection valve (70) for selecting a low temperature fuel, the first fuel selection valve (70) having a Diesel oil inlet, an ethanol/castor oil based fuel inlet, and a low temperature fuel outlet;
a second selection valve (72) for selecting from a low temperature fuel and a high temperature fuel, the second fuel selection valve (72) having a first inlet fluidly connected to the low temperature fuel outlet of the first fuel selection valve (70), a second heavy fuel oil inlet, and a selected fuel outlet; and
a first thermal isolator (74) provided in the fluid connection between the low temperature fuel outlet of the first fuel selection valve (70) and the first inlet of the second selection valve (72).

13. The power plant system (1) of claim 12, wherein the fuel selection unit (112) further comprises
a second thermal isolator (76) provided upstream of the second heavy fuel oil inlet of the second selection valve (72) and/or
at least one of an ethanol/castor oil based fuel counter unit (62), a heavy fuel oil counter unit (66), and a Diesel oil fuel counter (64), each having a sensor provided upstream of the respective inlet to the respective selection valve (70, 72) and/or
at least one of an ethanol/castor oil based fuel pump (60), a heavy fuel oil feed pump (24), and a Diesel oil feed pump (22), each being configured to be controlled by the respective fuel counter

14. The power plant system (1) of claim 12 or claim 13, wherein the second heavy fuel oil inlet of the second selection valve (72) is oriented in the mounted state such that it opens into a fluid connection between the first inlet and the selected fuel outlet from the top.
